# EUROPÄISCHE PATENTSCHRIFT

(11) **EP 3 877 225 B1**
(45) Veröffentlichungstag und Bekanntmachung des Hinweises auf die Patenterteilung: **21.09.2022**
(21) Anmeldenummer: 19795467.0
(22) Anmeldetag: 17.10.2019
(51) Int. Cl.: B60T 7/06, B60T 15/04

(54) **FUSSBREMSVENTIL EINER DRUCKLUFTBREMSANLAGE**
FOOT OPERATED BRAKE VALVE FOR AIR PRESSURE BRAKE SYSTEM
ROBINET DE FREIN À PIED POUR SYSTÈME DE FREINAGE PNEUMATIQUE

(30) Priorität: 08.11.2018 DE 102018127907
(43) Veröffentlichungstag der Anmeldung: 15.09.2021
(73) Patentinhaber: ZF CV Systems Europe BV, 1170 Brussels (BE)
(72) Erfinder: BEIER, Peter, 31515 Wunstorf (DE); COUPPEE, Ulrich, 31863 Coppenbrügge (DE); HÖLSCHER, Reiner, 30926 Seelze (DE); MARTINI, Gerhard, 30989 Gehrden (DE); RIEDIGER-JANISCH, Karl-Heinz, 30455 Hannover (DE); BINDSEIL, Olaf, 30167 Hannover (DE); ELZE, Petra, 30455 Hannover (DE); FABIAN, Alexander, 31224 Peine (DE); GLONDAJEWSKI, Gerrit, Hannover 30419 (DE); HOMANN, Sven, 30900 Wedemark (DE); HÖRSTMANN, Jan, 31275 Lehrte (DE); MÜLLER, Thomas, 30655 Hannover (DE)
(74) Vertreter: Ohlendorf, Henrike
(86) Internationale Anmeldenummer: PCT/EP2019/078187
(87) Internationale Veröffentlichungsnummer: WO 2020/094354

(56) Entgegenhaltungen:
- DE-A1- 2 937 657
- DE-B1- 2 619 775
- US-A- 4 305 623

## Beschreibung

Die Erfindung betrifft ein Fußbremsventil einer Druckluftbremsanlage in einem Motorfahrzeug, mit einer Montageplatte, auf der ein Bremspedal schwenkbar gelagert ist, und an der ein Gehäuse einer elektrischen Steuereinheit und/oder einer pneumatischen Steuereinheit befestigt ist, wobei in einem oben aus der Montageplatte herausragenden Ringbund ein federbelasteter, mit dem Bremspedal in Stellkontakt befindlicher Stößelkolben axialbeweglich geführt ist.

Ein Fußbremsventil einer Druckluftbremsanlage hat die Funktion, den Bremsdruck in den üblicherweise zwei Bremskreisen eines Motorfahrzeugs und gegebenenfalls eines Anhängefahrzeugs in Abhängigkeit von der Stellposition des von einem Fahrer zu betätigenden Bremspedals einzustellen. Hierzu stehen Steuerkolben der pneumatischen Steuereinheit über einen axialbeweglich geführten Stößel mit dem federbelasteten Stößelkolben in Stellverbindung, der unmittelbar in Stellkontakt mit dem Bremsventil ist. Das Gehäuse der pneumatischen Steuereinheit weist zwei Eingangsanschlüsse und zwei Ausgangsanschlüsse auf. Im eingebauten Zustand ist an die Eingangsanschlüsse jeweils eine über ein Mehrkreisschutzventil abgesicherte Vorratsdruckleitung angeschlossen. An die Ausgangsanschlüsse ist jeweils eine Bremsdruckleitung des jeweils zugeordneten Bremskreises angeschlossen. Die Eingangsanschlüsse und die Ausgangsanschlüsse der pneumatischen Steuereinheit sind zumeist an entgegengesetzten Seiten des Gehäuses angeordnet. Es sind jedoch auch Ausführungen von Fußbremsventilen bekannt, bei denen die Eingangsanschlüsse und die Ausgangsanschlüsse der pneumatischen Steuereinheit an derselben Seite des Gehäuses nebeneinander angeordnet sind.

Zwischen einer Montageplatte des Fußbremsventils und der pneumatischen Steuereinheit kann zusätzlich eine elektrische Steuereinheit angeordnet sein, mittels der in Abhängigkeit von der Stellposition des Bremspedals die Bremslichter des Motorfahrzeugs und gegebenenfalls eines Anhängefahrzeugs ein- und ausgeschaltet und/oder die Bremskraft eines Retarders dosiert werden kann. Zum Anschluss eines elektrischen Verbindungskabels ist eine Steckerbuchse vorgesehen, die üblicherweise an einem hervorstehenden Sockel an einer Seite des Gehäuses angeordnet ist.

Aus der DE 26 19 775 C2 ist ein Fußbremsventil einer Druckluftbremsanlage bekannt, bei dem zwischen der Montageplatte und der pneumatischen Steuereinheit eine elektrische Steuereinheit zur stufenweisen Steuerung der Bremskraft eines Retarders angeordnet ist.

In der DE 10 2013 015 973 A1 ist dagegen ein Fußbremsventil einer Druckluftbremsanlage beschrieben, bei dem zwischen der Montageplatte und der pneumatischen Steuereinheit eine elektrische Steuereinheit zum Ein- und Ausschalten der Bremslichter des Motorfahrzeugs und gegebenenfalls eines Anhängerfahrzeugs angeordnet ist.

Der Aufbau und die Funktionsweise verschiedener Ausführungen von Fußbremsventilen mit und ohne elektrischer Steuereinheit können der Druckschrift 815 020 003 3 "Systeme und Komponenten in Nutzfahrzeugen" (Ausgabe 2) der WABCO GmbH, Hannover unter Kapitel 1 "Motorwagen-Bremsgeräte", Abschnitt "Motorwagen-Bremsventile" (siehe Seiten 27 bis 32) entnommen werden, die im Internet unter http://www.wabco.info/8150200033 als PDF-Datei abrufbar ist.

Wie den genannten Druckschriften zu entnehmen ist, sind bei den Fußbremsventilen der WABCO GmbH, Hannover die Gehäuse der pneumatischen Steuereinheit und der elektrischen Steuereinheit jeweils über eine Flanschverschraubung miteinander sowie mit der Montageplatte verbunden. Da sowohl die Verbindungsflansche als auch deren Lochbild quadratisch und symmetrisch zur vertikalen Mittelachse des jeweiligen Fußbremsventils ausgeführt sind, können die pneumatische Steuereinheit und die elektrische Steuereinheit unabhängig voneinander bezüglich der vertikalen Mittelachse auch um 90°, 180° oder 270° verdreht zu einer Standardanordnung an der Montageplatte befestigt werden. Hierdurch können die Anschlüsse der pneumatischen Steuereinheit und die Steckerbuchse der elektrischen Steuereinheit in begrenztem Umfang so ausgerichtet werden, wie es für den Einbau des Fußbremsventils in einem bestimmten Motorfahrzeug am günstigsten ist.

Da diese Verstellmöglichkeit der Gehäuse in 90°-Schritten aber bei einigen Anwendungsfällen unzureichend sein kann, lag der vorliegenden Erfindung die Aufgabe zugrunde, ein Fußbremsventil einer Druckluft-Bremsanlage der eingangs genannten Bauart vorzustellen, bei dem das Gehäuse einer elektrischen Steuereinheit und/oder einer pneumatischen Steuereinheit stufenlos oder zumindest feiner abgestuft als in 90°-Schritten um die vertikale Mittelachse gedreht an der Montageplatte befestigt werden kann.

Diese Aufgabe ist durch ein Fußbremsventil mit den Merkmalen des Anspruchs 1 gelöst. Vorteilhafte Weiterbildungen sind in den abhängigen Ansprüchen definiert.

Die Erfindung betrifft demnach ein Fußbremsventil einer Druckluftbremsanlage in einem Motorfahrzeug, die eine Montageplatte aufweist, auf der ein Bremspedal schwenkbar gelagert ist, und an der ein Gehäuse einer elektrischen Steuereinheit und/oder einer pneumatischen Steuereinheit befestigt ist, wobei in einem oben aus der Montageplatte herausragenden Ringbund ein federbelasteter, mit dem Bremspedal in Stellkontakt befindlicher Stößelkolben axialbeweglich geführt ist.

Um das Gehäuse der pneumatischen Steuereinheit und gegebenenfalls einer elektrischen Steuereinheit stufenlos oder zumindest feiner als in 90°-Schritten um die vertikale Mittelachse des Fußbremsventils verdreht an der Montageplatte befestigen zu können, ist vorgesehen, dass das Gehäuse der unmittelbar unter der Montageplatte angeordneten Steuereinheit einen Zwischenflansch aufweist, der mit dem Hauptteil des Gehäuses verschraubt ist sowie den Ringbund aufweist, und dass der Zwischenflansch mit dem Ringbund um eine vertikale Mittelachse koaxial drehbar in einer Durchtrittsöffnung der Montageplatte geführt sowie mittels einer lösbaren Klemmverbindung kraftschlüssig mit der Montageplatte verbindbar ist.

Durch die Erweiterung des Fußbremsventils um den Zwischenflansch und die Klemmverbindung ist somit mit geringem Mehraufwand die Möglichkeit geschaffen, das Gehäuse der pneumatischen Steuereinheit und gegebenenfalls der elektrischen Steuereinheit derart um die vertikale Mittelachse gedreht an der Montageplatte zu befestigen, dass die Leitungsanschlüsse der pneumatischen Steuereinheit für den Anschluss von Druckluftleitungen und gegebenenfalls die Steckerbuchse der elektrischen Steuereinheit für den Anschluss eines Verbindungskabels in dem jeweiligen Motorfahrzeug optimal ausgerichtet sind.

Gemäß einer ersten Ausführungsvariante des erfindungsgemäßen Fußbremsventils ist vorgesehen, dass die Klemmverbindung durch eine äußere Ringnut in dem Ringbund des Zwischenflansches sowie zwei an dem Ringbund diagonal gegenüberliegend auf der Montageplatte angeordnete, in die Ringnut eingreifende Klemmbleche gebildet ist, und dass die Klemmbleche mit der Montageplatte verschraubt sind, jeweils im Querschnitt radial innen nach oben abgewinkelt sind und im montierten Zustand mit einer kreisbogenförmigen inneren Stirnwand an dem Nutboden der Ringnut sowie mit ihrem axial äußeren Innenrand an der oberen Seitenwand der Ringnut anliegen. Hierdurch ist der Zwischenflansch form- und kraftschlüssig an der Montageplatte befestigt.

Die innere Stirnwand der Klemmbleche und der Nutboden der Ringnut des Ringbundes, an denen die Klemmbleche und der Ringbund des Zwischenflansches radial gegeneinander verspannt sind, können jeweils glatt ausgeführt sein, wodurch bei gelöster Verschraubung der Klemmbleche eine stufenlose Einstellung der umfangsseitigen Ausrichtung der Gehäuse der Steuereinheiten gegenüber der Montageplatte möglich ist.

Alternativ dazu können die innere Stirnwand der Klemmbleche und der Nutboden der Ringnut des Ringbundes jedoch auch jeweils umfangsseitig verzahnt ausgeführt sein, wodurch eine erhöhte Verdrehsicherheit der Bauteile erzielt und bei gelöster Verschraubung der Klemmbleche eine entsprechend der Verzahnungsteilung abgestufte Einstellung der umfangsseitigen Ausrichtung der Gehäuse der Steuereinheiten gegenüber der Montageplatte möglich ist.

Um eine möglichst feinstufige Einstellung der umfangsseitigen Ausrichtung der Gehäuse der Steuereinheiten gegenüber der Montageplatte zu ermöglichen, sind die innere Stirnwand der Klemmbleche und der Nutboden der Ringnut des Ringbundes jeweils bevorzugt mit einer umfangsseitigen Kerbverzahnung versehen.

Gemäß einer zweiten Ausführungsvariante des erfindungsgemäßen Fußbremsventils ist vorgesehen, dass die Klemmverbindung durch eine Klemmverschraubung gebildet ist, welche folgendes aufweist: einen Ringbund an der Oberseite der Montageplatte mit einer zylindrischen Innenwand, einen Klemmring mit einer zylindrischen Außenwand und einer kegelförmigen, sich nach axial unten verengenden Innenwand, und eine kegelförmige Außenwand an dem Ringbund des Zwischenflansches sowie eine Überwurfmutter mit einem Innengewinde, wobei der Klemmring im montierten Zustand zwischen der Innenwand des Ringbundes der Montageplatte und der Außenwand des Ringbundes des Zwischenflansches angeordnet ist, und wobei durch die Verschraubung der Überwurfmutter mit dem Ringbund der Montageplatte mittels des Klemmrings eine radiale Verspannung der beiden Ringbunde bewirkt. Hierdurch ist der Zwischenflansch form- und kraftschlüssig an der Montageplatte befestigt.

Weiter kann vorgesehen sein, dass die zylindrische Innenwand des Ringbundes der Montageplatte, die kegelförmige Innenwand und die zylindrische Außenwand des Klemmrings sowie die kegelförmige Außenwand des Ringbundes des Zwischenflansches jeweils glatt ausgebildet sind. Hierdurch ist bei gelöster Verschraubung der Überwurfmutter eine stufenlose Einstellung der umfangsseitigen Ausrichtung der Gehäuse der Steuereinheiten gegenüber der Montageplatte möglich.

Alternativ dazu kann vorgesehen sein, dass die zylindrische Innenwand des Ringbundes der Montageplatte, die kegelförmige Innenwand und die zylindrische Außenwand des Klemmrings sowie die kegelförmige Außenwand des Ringbundes des Zwischenflansches jeweils umfangsseitig verzahnt ausgebildet sind. Hierdurch ist eine erhöhte Verdrehsicherheit der Bauteile erzielt, und bei gelöster Verschraubung der Überwurfmutter ist eine entsprechend der Verzahnungsteilung abgestufte Einstellung der umfangsseitigen Ausrichtung der Gehäuse der Steuereinheiten gegenüber der Montageplatte möglich.

Um eine möglichst feinstufige Einstellung der umfangsseitigen Ausrichtung der Gehäuse der Steuereinheiten gegenüber der Montageplatte zu ermöglichen, sind die zylindrische Innenwand des Ringbundes der Montageplatte, die kegelförmige Innenwand und die zylindrische Außenwand des Klemmrings sowie die kegelförmige Außenwand des Ringbundes des Zwischenflansches jeweils mit einer umfangsseitigen Kerbverzahnung versehen.

Gemäß einer anderen Ausführungsform des erfindungsgemäßen Fußbremsventils ist vorgesehen, dass die Klemmverbindung durch eine Klemmverschraubung gebildet ist, welche folgendes aufweist: Einen Ringbund an der Oberseite der Montageplatte mit einem Außengewinde und mit einer kegelförmigen, sich nach axial unten verengenden Innenwand, einen Klemmring mit einer kegelförmigen, sich nach axial unten verengenden Außenwand und einer zylindrischen Innenwand, eine zylindrische Außenwand an dem Ringbund des Zwischenflansches und eine Überwurfmutter mit einem Innengewinde, sowie mit einem Außengewinde am Ringbund des Zwischenflansches und ein Innengewinde an der Innenwand des Klemmrings, wobei dass Innengewinde des Klemmrings im montierten Zustand mit dem Außengewinde des Zwischenflansches verschraubt ist, und wobei durch die Verschraubung der Überwurfmutter mit dem Ringbund der Montageplatte über den Klemmring eine radiale Verspannung der beiden Ringbunde bewirkt wird.

Hierbei kann vorgesehen sein, dass die Innenwand des Ringbundes an der Oberseite der Montageplatte sowie die Außenwand des Klemmrings jeweils glatt ausgebildet sind.

Zudem wird es als vorteilhaft erachtet, wenn der Klemmring zumindest der zuletzt genannten Ausführungsform axial geschlitzt ausgebildet ist oder aus mehreren Ringsegmenten besteht. Hierdurch wird das koaxial Hineindrücken des Klemmrings in den Klemmsitz erleichtert.

Zur weiteren Verdeutlichung der Erfindung ist der Beschreibung eine Zeichnung mit zwei Ausführungsbeispielen beigefügt. In dieser zeigt
Fig. 1 eine erste Ausführungsform eines erfindungsgemäßen Fußbremsventils einer Druckluftbremsanlage in einer ausschnittsweisen Draufsicht,
Fig. 1a das Fußbremsventil gemäß Fig. 1 in einem ausschnittsweisen Längsschnitt,
Fig. 2 eine zweite Ausführungsform eines erfindungsgemäßen Fußbremsventils einer Druckluftbremsanlage in einer ausschnittsweisen Draufsicht,
Fig. 2a das Fußbremsventil gemäß Fig. 2 in einem ausschnittsweisen Längsschnitt,
Fig. 2b eine dritte Ausführungsform eines erfindungsgemäßen Fußbremsventils in einem ausschnittsweisen Längsschnitt,
Fig. 3 ein bekanntes Fußbremsventil einer Druckluftbremsanlage in einer perspektivischen Ansicht, und
Fig. 3a das Fußbremsventil gemäß Fig. 3 in einem Längsschnitt.

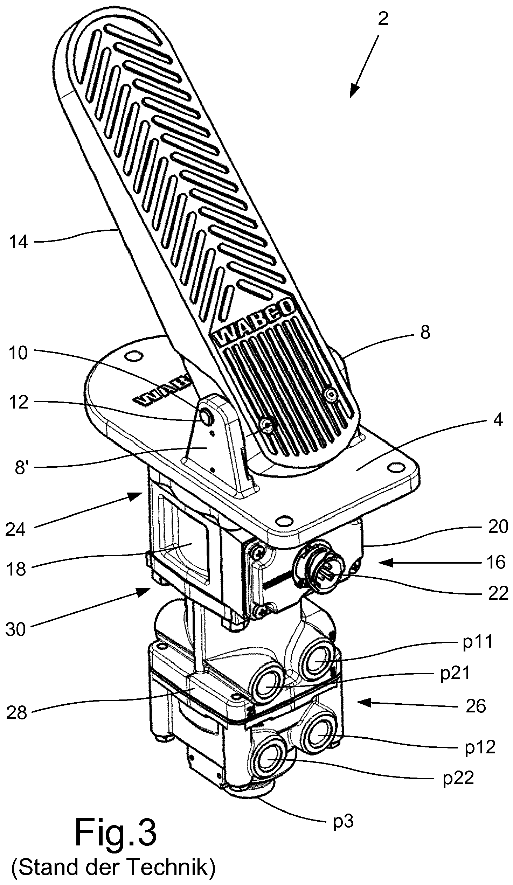

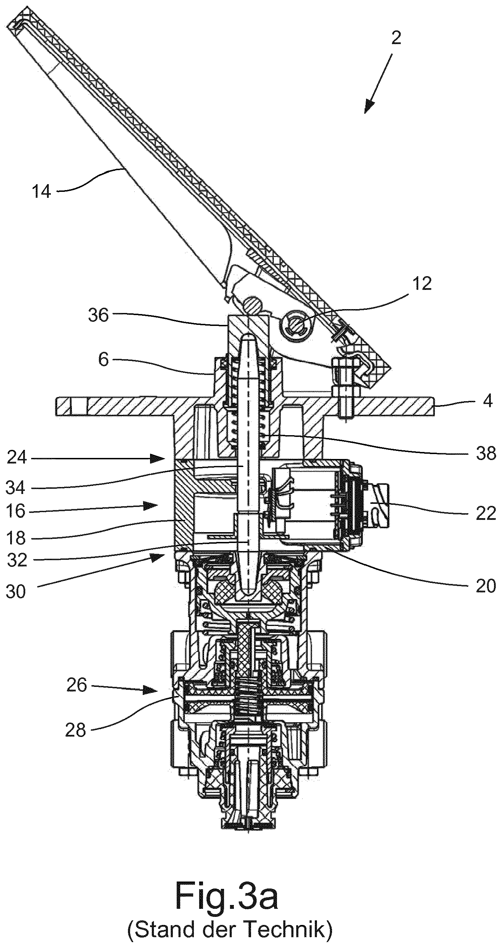

Ein in einer perspektivischen Ansicht gemäß Fig. 3 und in einem Längsschnitt gemäß Fig. 3a abgebildetes bekanntes Fußbremsventil 2 einer Druckluftbremsanlage weist eine Montageplatte 4 mit einem nach oben herausragenden Ringbund 6 und zwei auf der Oberseite der Montageplatte 4 parallel zueinander angeordnete Laschen 8, 8' auf. In jeweils einer Lagerbohrung 10 der Laschen 8, 8' ist ein Lagerbolzen 12 eingesetzt, auf dem ein Bremspedal 14 schwenkbar gelagert ist. Auf der Unterseite der Montageplatte 4 sind das Gehäuse 18 einer elektrischen Steuereinheit 16 und das Gehäuse 28 einer pneumatischen Steuereinheit 26 angeordnet, die über jeweils eine Flanschverschraubung 24, 30 miteinander sowie mit der Montageplatte 4 verbunden sind. Die Steuerelemente der beiden Steuereinheiten 16, 26, wie elektrische Schalter und pneumatische Ventile, stehen mit einem langgestreckten Stößel 34 in Stellverbindung, der axialbeweglich koaxial zu einer vertikalen Mittelachse 32 der Gehäuse 18, 28 geführt ist. An seinem oberen Ende greift der Stößel 34 in eine Zentralbohrung eines Stößelkolbens 36 ein, der belastet von einer als Schraubenfeder ausgebildeten Druckfeder 38 axialbeweglich in dem Ringbund 6 der Montageplatte 4 geführt ist sowie unmittelbar mit dem Bremspedal 14 in Stellverbindung ist.

Durch eine Betätigung des Bremspedals 14 werden der Stößelkolben 36 und der Stößel 34 gegen die Rückstellkraft der Schraubenfeder 38 nach unten gedrückt, wodurch in der elektrischen Steuereinheit 16 nacheinander elektrische Kontakte geschlossen werden, durch welche die Bremskraft eines in dem betreffenden Motorfahrzeug eingebauten Retarders stufenweise erhöht wird. Zur Übertragung der elektrischen Schaltsignale ist (in Vorwärts-Fahrtrichtung gesehen) auf der Rückseite des Gehäuses 18 eine auf einem Sockel 20 montierte Steckerbuchse 22 angeordnet, an die ein zu einem Steuergerät oder unmittelbar zu dem Retarder führendes elektrisches Verbindungskabel anschließbar ist.

In der pneumatischen Steuereinheit 26 werden durch die Betätigung des Bremspedals und die dadurch bewirkte Axialverschiebung des Stößels 34 nach unten die Ausgangsanschlüsse p21, p22 von zwei Bremskreisen des Motorfahrzeugs jeweils gegenüber einem Entlüftungsausgang p3 abgesperrt und mit einem zugeordneten Eingangsanschluss p11, p12 verbunden, wodurch der an den Ausgangsanschlüssen p21, p22 anliegende Bremsdruck kontinuierlich erhöht wird. Vorliegend sind die Eingangsanschlüsse p11, p12, an die im eingebauten Zustand jeweils eine über ein Mehrkreisschutzventil abgesicherte Vorratsdruckleitung angeschlossen ist, und die Ausgangsanschlüsse p21, p22, an die im eingebauten Zustand jeweils eine Bremsdruckleitung des zugeordneten Bremskreises angeschlossen ist, nebeneinander auf der Rückseite des Gehäuses 28 angeordnet.

Die Verbindungsflansche der Flanschverschraubungen 24, 30 als auch deren Lochbild sind quadratisch und symmetrisch zu der vertikalen Mittelachse 32 des Fußbremsventils 2 ausgeführt, so dass die pneumatische Steuereinheit 26 und die elektrische Steuereinheit 16 unabhängig voneinander bezüglich der vertikalen Mittelachse 32 auch um 90°, 180° oder 270° gedreht zu der abgebildeten Standardanordnung an der Montageplatte 4 befestigt werden können. Da hierdurch nur eine eingeschränkte Ausrichtung der Ein- und Ausgangsanschlüsse p11, p12, p21, p22 der pneumatischen Steuereinheit 26 und der Steckerbuchse 22 der elektrischen Steuereinheit 16 an die Gegebenheiten in einem bestimmten Motorfahrzeug möglich ist, soll das erfindungsgemäße Fußbremsventil eine stufenlose oder zumindest feiner abgestufte Ausrichtung der Gehäuse 18, 28 der beiden Steuereinheiten 16, 26 bezüglich der Mittelachse 32 ermöglichen.

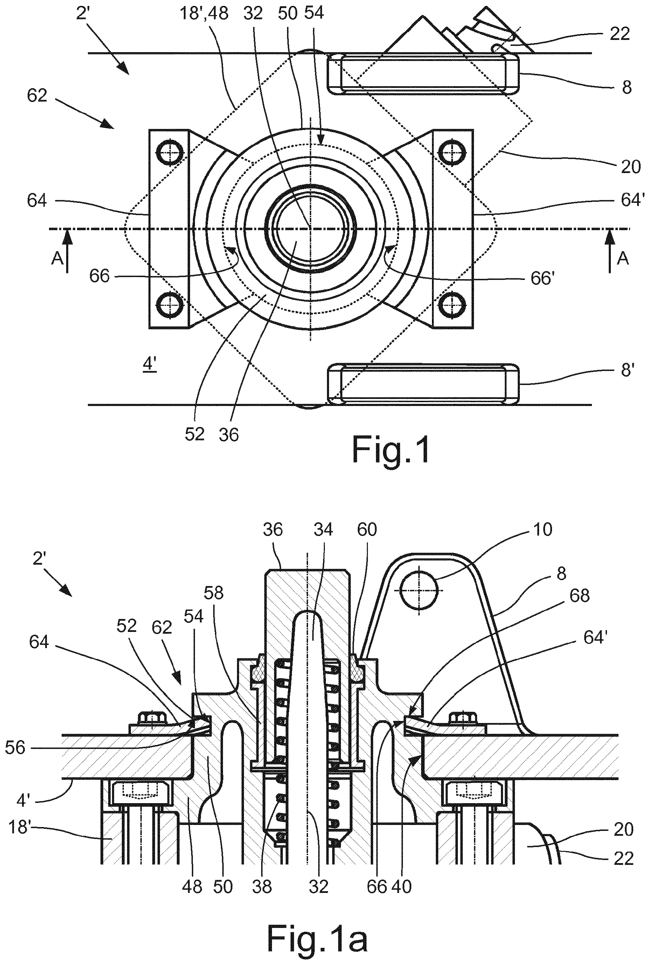

Bei einer in der Draufsicht gemäß Fig. 1 und in dem in der Schnittebene A-A gemäß Fig. 1 liegenden Längsschnitt der Fig. 1a jeweils ausschnittsweise abgebildeten ersten Ausführung eines erfindungsgemäßen Fußbremsventils 2' einer Druckluftbremsanlage weist das Gehäuse 18' der elektrischen Steuereinheit 16 einen Zwischenflansch 48 auf, der mit dem Hauptteil des Gehäuses 18' mittels Innensechskantschrauben verschraubt ist und einen Ringbund 50 aufweist, in dem der Stößelkolben 36 axialbeweglich geführt ist. Zur reibungsarmen und abgedichteten Führung des Stößelkolbens 36 sind eine Gleitlagerbuchse 58 und ein Dichtring 60 in den Ringbund 50 des Zwischenflansches 48 eingesetzt. Der Zwischenflansch 48 ist mit dem Ringbund 50 um die vertikale Mittelachse 32 drehbar in einer Durchtrittsöffnung 40 der Montageplatte 4' geführt und mittels einer lösbaren Klemmverbindung 62 kraftschlüssig mit der Montageplatte 4' verbindbar.

Die Klemmverbindung 62 ist durch eine radial äußere Ringnut 52 in dem Ringbund 50 des Zwischenflansches 48 und zwei an dem Ringbund 50 diagonal gegenüberliegend auf der Montageplatte 4' angeordnete, in die Ringnut 52 eingreifende Klemmbleche 64, 64' gebildet. Die beiden Klemmbleche 64, 64' sind mit der Montageplatte 4' verschraubt und jeweils radial innen nach axial oben abgewinkelt. Im montierten Zustand liegen die Klemmbleche 64, 64' jeweils mit einer kreisbogenförmigen inneren Stirnwand 66, 66' derselben an dem Nutboden 54 der Ringnut 52 sowie mit ihrem axial äußeren Innenrand 68 an der oberen Seitenwand 56 der Ringnut 52 an, wodurch der Zwischenflansch 48 form- und kraftschlüssig an der Montageplatte 4' befestigt ist.

Die innere Stirnwand 66 der Klemmbleche 64, 64' und der Nutboden 54 der Ringnut 52 des Ringbundes 50 können jeweils wahlweise glatt oder, insbesondere mittels einer Kerbverzahnung, umfangsseitig verzahnt ausgeführt sein. Hierdurch ist bei gelöster Verschraubung der Klemmbleche 64, 64' entweder eine stufenlose oder eine entsprechend der Verzahnungsteilung abgestufte Einstellung der umfangsseitigen Ausrichtung der Gehäuse 18', 28 der Steuereinheiten 16, 26 gegenüber der Montageplatte 4' möglich. In den Abbildungen der Figuren 1 und 1a sind die Gehäuse 18', 28 der Steuereinheiten 16, 26 ausgehend von einer Standardeinstellung, in der die pneumatischen Anschlüsse p11, p12, p21, p22 und die Steckerbuchse 22 (in Vorwärts-Fahrtrichtung) nach hinten ausgerichtet sind, bezüglich der vertikalen Mittelachse 32 beispielhaft um 45° im Gegenuhrzeigersinn gedreht an der Montageplatte 4' befestigt.

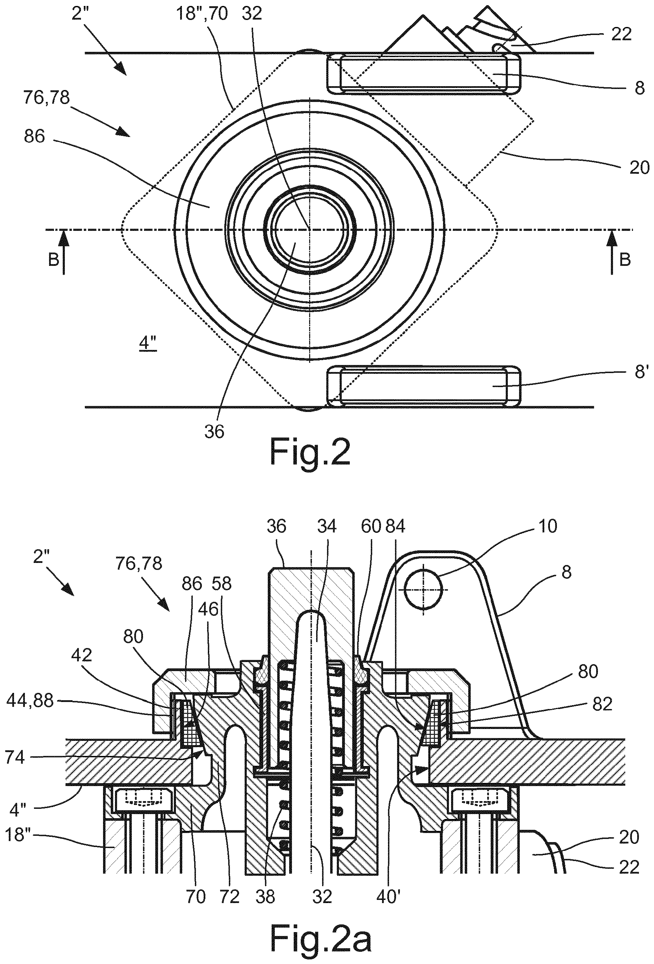

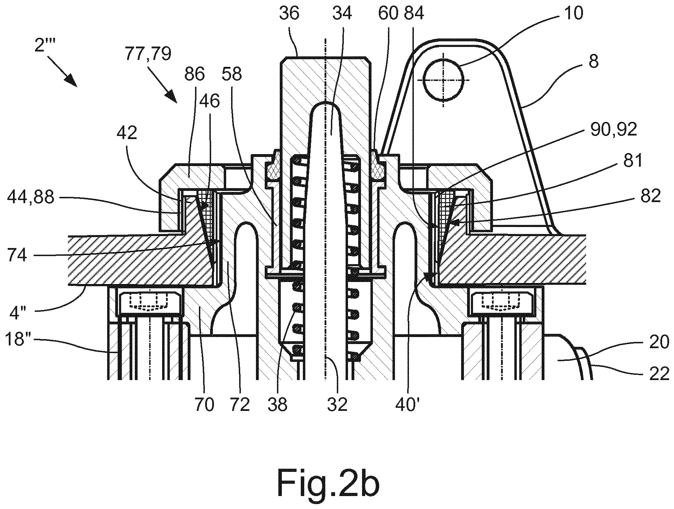

Bei einer in der Draufsicht gemäß Fig. 2 und in dem in der Schnittebene B-B gemäß Fig. 2 liegenden Längsschnitt der Fig. 2a jeweils ausschnittsweise abgebildeten zweiten Ausführungsform eines erfindungsgemäßen Fußbremsventils 2" einer Druckluftbremsanlage weist das Gehäuse 18" der elektrischen Steuereinheit 16 einen Zwischenflansch 70 auf, der mit dem Hauptteil des Gehäuses 18" verschraubt ist. Der Zwischenflansch 70 weist einen Ringbund 72 auf, in dem der Stößelkolben 36 axialbeweglich geführt ist. Zur reibungsarmen und abgedichteten Führung des Stößelkolbens 36 sind eine Gleitlagerbuchse 58 und ein Dichtring 60 in den Ringbund 72 des Zwischenflansches 70 eingesetzt. Der Zwischenflansch 70 ist mit dem Ringbund 72 um die vertikale Mittelachse 32 drehbar in einer Durchtrittsöffnung 40' der Montageplatte 4" geführt und mittels einer lösbaren Klemmverbindung 76 kraftschlüssig mit der Montageplatte 4" verbindbar.

Die Klemmverbindung 76 ist durch eine Klemmverschraubung 78 gebildet, die summarisch einen Ringbund 42 an der Oberseite der Montageplatte 4" mit einem zylindrischen Außengewinde 44 sowie mit einer zylindrischen Innenwand 46 aufweist, zudem einen Klemmring 80 mit einer kegelförmigen, sich nach axial unten verengenden Innenwand 84 sowie mit einer zylindrischen Außenwand 82 aufweist, und eine kegelförmige Außenwand 74 an dem Ringbund 72 des Zwischenflansches 70 sowie eine Überwurfmutter 86 mit einem Innengewinde 88 umfasst. Die Überwurfmutter 86 wirkt erkennbar auf eine axiale Erhöhung an der Oberseite des Ringbundes 72 des Zwischenflansches 70. Der Klemmring 80 ist im montierten Zustand zwischen der Innenwand 46 des Ringbundes 42 der Montageplatte 4" und der Außenwand 74 des Ringbundes 72 des Zwischenflansches 70 angeordnet. Durch die Verschraubung der Überwurfmutter 86 mit dem Ringbund 42 der Montageplatte 4" wird über den Ringbund 72 des Zwischenflansches 70 eine radiale Verspannung der beiden genannten Ringbunde 42, 72 bewirkt, durch welche der Zwischenflansch 70 form- und kraftschlüssig an der Montageplatte 4" befestigt ist.

Die zylindrische Innenwand 46 des Ringbundes 42 der Montageplatte 4", die zylindrische Außenwand 82 und die kegelförmige Innenwand 84 des Klemmrings 80 sowie die kegelförmige Außenwand 74 des Ringbundes 72 des Zwischenflansches 70 können jeweils wahlweise glatt oder, insbesondere mittels einer Kerbverzahnung, umfangsseitig verzahnt ausgeführt sein. Hierdurch ist bei gelöster Verschraubung der Überwurfmutter 86 entweder eine stufenlose oder eine entsprechend der Verzahnungsteilung abgestufte Einstellung der umfangsseitigen Ausrichtung der Gehäuse 18", 28 der Steuereinheiten 16, 26 gegenüber der Montageplatte 4" möglich. In den Abbildungen der Figuren 2 und 2a sind die Gehäuse 18", 28 der Steuereinheiten 16, 26 ausgehend von einer Standardeinstellung, in der die pneumatischen Anschlüsse p11, p12, p21, p22 und die Steckerbuchse 22 in Vorwärts-Fahrtrichtung nach hinten ausgerichtet sind, bezüglich der vertikalen Mittelachse 32 beispielhaft um 45° im Gegenuhrzeigersinn gedreht an der Montageplatte 4" befestigt.

Fig. 2b zeigt in einem teilweisen Längsschnitt eine dritte Ausführungsform eines die Merkmale der Erfindung aufweisenden Fußbremsventils 2"'. Bei diesem Fußbremsventils 2‴ ist die Klemmverbindung 77 ebenfalls durch eine Klemmverschraubung 79 gebildet. Die Klemmverschraubung 79 weist an der Oberseite der Montageplatte 4" ein Ringbund 42 auf, an dem ein Außengewinde 44 sowie eine kegelförmige, sich nach axial unten verengenden Innenwand 46 ausgebildet ist. Zudem gehört zu der Klemmverschraubung 79 ein Klemmring 81 mit einer kegelförmigen, sich nach axial unten verengenden Außenwand 82 und einer zylindrischen Innenwand 84. Des Weiteren gehört zu der Klemmverschraubung 79 eine zylindrische Außenwand 74 an dem Ringbund 72 des Zwischenflansches 70 und eine Überwurfmutter 86 mit einem Innengewinde 88. Außerdem gehört zu der Klemmverschraubung 79 ein Außengewinde 90 am Ringbund 72 des Zwischenflansches 70 und ein Innengewinde 92 an der zylindrischen Innenwand 84 des Klemmrings 81. Die Überwurfmutter 86 wurde auf den Ringbund 42 aufgeschraubt und wirkt erkennbar auf das obere Ende des Klemmrings 81 sowie auf einen überwurfmutternahen Abschnitt des Ringbundes 72 des Zwischenflansches 70.

Die genannten Bauteile wirken derartig zusammen, dass das Innengewinde 92 des Klemmrings 81 im montierten Zustand mit dem Außengewinde 90 des Zwischenflansches 70 verschraubt ist, wobei durch die Verschraubung der Überwurfmutter 86 mit dem Ringbund 42 der Montageplatte 4" über den Klemmring 80 und den überwurfmutternahen Abschnitt des Ringbundes 72 des Zwischenflansches 70 eine radiale Verspannung der beiden Ringbunde 42, 72 bewirkt wird.

Bei dem Fußbremsventil 2‴ gemäß Fig. 2b können die radiale Innenwand 46 des Ringbundes 42 an der Oberseite der Montageplatte 4" sowie die radiale Außenwand 82 des Klemmrings 80 jeweils glatt ausgebildet sein.

Zur Erzielung einer optimalen Klemmwirkung kann vorgesehen sein, dass der Klemmring 81 axial geschlitzt ausgebildet ist oder aus mehreren Ringsegmenten besteht.

### Bezugszeichenliste (Teil der Beschreibung)

- 2: Fußbremsventil (bekannte Ausführungsform)
- 2', 2", 2‴: Fußbremsventil (erfindungsgemäße Ausführungsformen)
- 4: Montageplatte (bekannte Ausführungsform)
- 4', 4": Montageplatte
- 6: Ringbund
- 8,8': Lasche
- 10: Lagerbohrung
- 12: Lagerbolzen
- 14: Bremspedal
- 16: Elektrische Steuereinheit
- 18: Gehäuse
- 18', 18": Gehäuse (Hauptteil)
- 20: Sockel
- 22: Steckerbuchse
- 24: Flanschverschraubung
- 26: Pneumatische Steuereinheit
- 28: Gehäuse
- 30: Flanschverschraubung
- 32: Vertikale Mittelachse
- 34: Stößel
- 36: Stößelkolben
- 38: Druckfeder, Schraubenfeder
- 40, 40': Durchtrittsöffnung
- 42: Ringbund der Montageplatte 4"
- 44: Außengewinde des Ringbundes 42
- 46: Innenwand des Ringbundes 42
- 48: Zwischenflansch
- 50: Ringbund am Zwischenflansch 48
- 52: Ringnut im Ringbund 50
- 54: Nutboden
- 56: Obere Seitenwand
- 58: Gleitlagerbuchse
- 60: Dichtring
- 62: Klemmverbindung
- 64, 64': Klemmbleche
- 66, 66': Innere Stirnwand der Ringnut 52
- 68: Äußerer Innenrand der Klemmbleche
- 70: Zwischenflansch
- 72: Ringbund am Zwischenflansch 70
- 74: Außenwand des Ringbundes 72 des Zwischenflansches 70
- 76: Klemmverbindung
- 77: Klemmverbindung
- 78: Klemmverschraubung
- 79: Klemmverschraubung
- 80: Klemmring
- 81: Klemmring
- 82: Außenwand des Klemmrings 80
- 84: Innenwand des Klemmrings 80
- 86: Überwurfmutter
- 88: Innengewinde der Überwurfmutter
- 90: Außengewinde an dem Ringbund 72 des Zwischenflansches 70
- 92: Innengewinde an dem Klemmring 81
- A-A: Schnittebene
- B-B: Schnittebene
- p3: Entlüftungsausgang
- p11: Eingangsanschluss, Vorratsdruckeingang
- p12: Eingangsanschluss, Vorratsdruckeingang
- p21: Ausgangsanschluss, Bremsdruckausgang
- p22: Ausgangsanschluss, Bremsdruckausgang

## Patentansprüche

1. Fußbremsventil (2', 2", 2‴) für eine Druckluftbremsanlage eines Motorfahrzeugs, mit einer Montageplatte (4', 4"), auf der ein Bremspedal (14) schwenkbar gelagert ist, und an der ein Gehäuse (18', 18"; 28) einer elektrischen Steuereinheit (16) und/oder einer pneumatischen Steuereinheit (26) befestigt ist, wobei in einem oben aus der Montageplatte (4', 4") herausragenden Ringbund (50, 72) ein federbelasteter, mit dem Bremspedal (14) in Stellkontakt befindlicher Stößelkolben (36) axialbeweglich geführt ist, **dadurch gekennzeichnet, dass** das Gehäuse (18', 18") der unmittelbar unter der Montageplatte (4', 4") angeordneten Steuereinheit (16) einen Zwischenflansch (48, 70) aufweist, der mit dem Hauptteil des Gehäuses (18', 18") verschraubt ist sowie den Ringbund (50, 72) aufweist, und dass der Zwischenflansch (48, 70) mit dem Ringbund (50, 72) um eine vertikale Mittelachse (32) koaxial drehbar in einer Durchtrittsöffnung (40, 40') der Montageplatte (4', 4") geführt sowie mittels einer lösbaren Klemmverbindung (62, 76, 77) kraftschlüssig mit der Montageplatte (4', 4") verbindbar ist.

2. Fußbremsventil (2') nach Anspruch 1, **dadurch gekennzeichnet, dass** die Klemmverbindung (62) durch eine äußere Ringnut (52) in dem Ringbund (50) des Zwischenflansches (48) sowie zwei an dem Ringbund (50) diagonal gegenüberliegend auf der Montageplatte (4') angeordnete, in die Ringnut (52) eingreifende Klemmbleche (64, 64') gebildet ist, und dass die Klemmbleche (64, 64') mit der Montageplatte (4') verschraubt sind, jeweils im Querschnitt radial innen nach oben abgewinkelt sind und im montierten Zustand mit einer kreisbogenförmigen inneren Stirnwand (66) an dem Nutboden (54) der Ringnut (52) sowie mit ihrem axial äußeren Innenrand (68) an der oberen Seitenwand (56) der Ringnut (52) anliegen.

3. Fußbremsventil (2') nach Anspruch 2, **dadurch gekennzeichnet, dass** die innere Stirnwand (66) der Klemmbleche (64, 64') und der Nutboden (54) der Ringnut (52) des Ringbundes (50) jeweils glatt ausgebildet sind.

4. Fußbremsventil (2') nach Anspruch 2, **dadurch gekennzeichnet, dass** die innere Stirnwand (66) der Klemmbleche (64, 64') und der Nutboden (54) der Ringnut (52) des Ringbundes (50) jeweils umfangsseitig verzahnt ausgebildet sind.

5. Fußbremsventil (2') nach Anspruch 4, **dadurch gekennzeichnet, dass** die innere Stirnwand (66) der Klemmbleche (64, 64') und der Nutboden (54) der Ringnut (52) des Ringbundes (50) jeweils mit einer umfangsseitigen Kerbverzahnung versehen sind.

6. Fußbremsventil (2") nach Anspruch 1, **dadurch gekennzeichnet, dass** die Klemmverbindung (76) durch eine Klemmverschraubung (78) gebildet ist, welche folgendes umfasst: einen Ringbund (42) an der Oberseite der Montageplatte (4") mit einer zylindrischen Innenwand (46), einen Klemmring (80) mit einer zylindrischen Außenwand (82) und einer kegelförmigen, sich nach axial unten verengenden Innenwand (84), und eine kegelförmige Außenwand (74) an dem Ringbund (72) des Zwischenflansches (70) sowie eine Überwurfmutter (86) mit einem Innengewinde (88), wobei der Klemmring (80) im montierten Zustand zwischen der Innenwand (46) des Ringbundes (42) der Montageplatte (4") und der Außenwand (74) des Ringbundes (72) des Zwischenflansches (70) angeordnet ist, und wobei durch die Verschraubung der Überwurfmutter (86) mit dem Ringbund (42) der Montageplatte (4") mittels des Klemmrings (80) eine radiale Verspannung der beiden Ringbunde (42, 72) bewirkt.

7. Fußbremsventil (2") nach Anspruch 6, **dadurch gekennzeichnet, dass** die zylindrische Innenwand (46) des Ringbundes (42) der Montageplatte (4"), die kegelförmige Innenwand (84) und die zylindrische Außenwand (82) des Klemmrings (80) sowie die kegelförmige Außenwand (74) des Ringbundes (72) des Zwischenflansches (70) jeweils glatt ausgebildet sind.

8. Fußbremsventil (2") nach Anspruch 6, **dadurch gekennzeichnet, dass** die zylindrische Innenwand (46) des Ringbundes (42) der Montageplatte (4"), die kegelförmige Innenwand (84) und die zylindrische Außenwand (82) des Klemmrings (80) sowie die kegelförmige Außenwand (74) des Ringbundes (72) des Zwischenflansches (70) jeweils umfangsseitig verzahnt ausgebildet sind.

9. Fußbremsventil (2") nach Anspruch 8, **dadurch gekennzeichnet, dass** die zylindrische Innenwand (46) des Ringbundes (42) der Montageplatte (4"), die kegelförmige Innenwand (84) und die zylindrische Außenwand (82) des Klemmrings (80) sowie die kegelförmige Außenwand (74) des Ringbundes (72) des Zwischenflansches (70) jeweils mit einer umfangsseitigen Kerbverzahnung versehen sind.

10. Fußbremsventil (2‴) nach Anspruch 1, **dadurch gekennzeichnet, dass** die Klemmverbindung (77) durch eine Klemmverschraubung (79) gebildet ist, welche folgendes umfasst: einen Ringbund (42) an der Oberseite der Montageplatte (4") mit einem Außengewinde (44) und mit einer kegelförmigen, sich nach axial unten verengenden Innenwand (46), einen Klemmring (81) mit einer kegelförmigen, sich nach axial unten verengenden Außenwand (82) und einer zylindrischen Innenwand (84), eine zylindrische Außenwand (74) an dem Ringbund (72) des Zwischenflansches (70) und eine Überwurfmutter (86) mit einem Innengewinde (88), sowie mit einem Außengewinde (90) am Ringbund (72) des Zwischenflansches (70) und ein Innengewinde (92) an der Innenwand (84) des Klemmrings (81), wobei dass Innengewinde (92) des Klemmrings (81) im montierten Zustand mit dem Außengewinde (90) des Zwischenflansches (70) verschraubt ist, und wobei durch die Verschraubung der Überwurfmutter (86) mit dem Ringbund (42) der Montageplatte (4") über den Klemmring (80) eine radiale Verspannung der beiden Ringbunde (42, 72) bewirkt wird.

11. Fußbremsventil (2‴) nach Anspruch 10, **dadurch gekennzeichnet, dass** die Innenwand (46) des Ringbundes (42) an der Montageplatte (4") sowie die Außenwand (82) des Klemmrings (81) jeweils glatt ausgebildet sind.

12. Fußbremsventil (2‴) nach einem der Ansprüche 6 bis 11, **dadurch gekennzeichnet, dass** der Klemmring (80, 81) axial geschlitzt ausgebildet ist oder aus mehreren Ringsegmenten besteht.

## Claims

1. A foot operated brake valve (2', 2", 2‴) for an air pressure brake system of a motor vehicle, having an installation plate (4', 4"), upon which a brake pedal (14) is pivoted, and to which a housing (18', 18", 28) of an electrical control unit (16) and/or of a pneumatic control unit (26) is attached, wherein in an annular collar (50, 72) protruding above from the installation plate (4', 4") a spring-loaded plunger piston (36) in actuating contact with the brake pedal (14) is guided axially movably, **characterized in that** the housing (18', 18") of the control unit (16) arranged directly below the installation plate (4', 4") comprises an intermediate flange (48, 70), which is screw connected to the principal part of the housing (18' 18") as well as the annular collar (50, 72), and that the intermediate flange (48, 70) with the annular collar (50, 72) is coaxially rotatably guided about a vertical central axis (32) in a passage opening (40, 40') of the installation plate (4' 4") as well as non-positively connectable to the installation plate (4', 4") by means of a detachable clamping connection (62, 76, 77).

2. The foot operated brake valve (2') according to claim 1, **characterized in that** the clamping connection (62) is formed by an outer annular groove (52) in the annular collar (50) of the intermediate flange (48) as well as two clamping plates (64, 64') arranged diagonally opposite from each other on the annular collar (50) on the installation plate (4') engaging the annular groove (52), and that the clamping plates (64, 64') are screw connected to the installation plate (4'), in each case being angled upward in cross-section in a radially inward direction and in the installed state abutting with a circular-arc-shaped inner end wall (66) on the groove base (54) of the annular groove (52) as well as with their axially external inner edge (68) on the upper lateral wall (56) of the annular groove (52).

3. The foot operated brake valve (2') according to claim 2, **characterized in that** the inner end wall (66) of the clamping plates (64, 64') and the groove base (54) of the annular groove (52) of the annular collar (50) are both smooth.

4. The foot operated brake valve (2') according to claim 2, **characterized in that** the inner end wall (66) of the clamping plates (64, 64') and the groove base (54) of the annular groove (52) of the annular collar (50) are both circumferentially toothed.

5. The foot operated brake valve (2') according to claim 4, **characterized in that** the inner end wall (66) of the clamping plates (64, 64') and the groove base (54) of the annular groove (52) of the annular collar (50) are respectively provided with a circumferential serration.

6. The foot operated brake valve (2") according to claim 1, **characterized in that** the clamping connection (76) is formed by a clamping screw connection (78), comprising the following: an annular collar (42) on the top side of the installation plate (4") having a cylindrical inner wall (46), a clamping ring (80) having a cylindrical outer wall (82) and a conical inner wall (84) narrowing axially downward, and a conical outer wall (74) on the annular collar (72) of the intermediate flange (70) as well as a union nut (86) having an internal thread (88), wherein the clamping ring (80) in the installed state is arranged between the inner wall (46) of the annular collar (42) of the installation plate (4") and the outer wall (74) of the annular collar (72) of the intermediate flange (70), and wherein a radial bracing of the two annular collars (42, 72) is caused by screwing the union nut (86) to the annular collar (42) of the installation plate (4") by means of the clamping ring (80).

7. The foot operated brake valve (2") according to claim 6, **characterized in that** the cylindrical inner wall (46) of the annular collar (42) of the installation plate (4") the conical inner wall (84) and the cylindrical outer wall (82) of the clamping ring (80) and the conical outer wall (74) of the annular collar (72) of the intermediate flange (70) are all smooth.

8. The foot operated brake valve (2") according to claim 6, **characterized in that** the cylindrical inner wall (46) of the annular collar (42) of the installation plate (4"), the conical inner wall (84) and the cylindrical outer wall (82) of the clamping ring (80) and the conical outer wall (74) of the annular collar (72) of the intermediate flange (70) are all circumferentially toothed.

9. The foot operated brake valve (2") according to claim 8, **characterized in that** the cylindrical inner wall (46) of the annular collar (42) of the installation plate (4"), the conical inner wall (84) and the cylindrical outer wall (82) of the clamping ring (80) and the conical outer wall (74) of the annular collar (72) of the intermediate flange (70) are respectively provided with a circumferential serration.

10. The foot operated brake valve (2‴) according to claim 1, **characterized in that** the clamping connection (77) is formed by a clamping screw connection (79), comprising the following: an annular collar (42) on the top side of the installation plate (4") having an external thread (44) and having a conical inner wall (46) narrowing axially downward, a clamping ring (81) having a conical outer wall (82) narrowing axially downward and a cylindrical inner wall (84), a cylindrical outer wall (74) on the annular collar (72) of the intermediate flange (70) and a union nut (86) having an internal thread (88), as well as having an external thread (90) on the annular collar (72) of the intermediate flange (70) and an internal thread (92) on the inner wall (84) of the clamping ring (81), wherein the internal thread (92) of the clamping ring (81) in the installed state is screw connected to the external thread (90) of the intermediate flange (70), and wherein a radial bracing of the two annular collars (42, 72) is caused by screwing the union nut (86) to the annular collar (42) of the installation plate (4") via the clamping ring (80).

11. The foot operated brake valve (2‴) according to claim 10, **characterized in that** the inner wall (46) of the annular collar (42) on the installation plate (4") and the outer wall (82) of the clamping ring (81) are both smooth.

12. The foot operated brake valve (2‴) according to any of claims 6 to 11, **characterized in that** the clamping ring (80, 81) is axially slotted or consists of a plurality of ring segments.

## Revendications

1. Valve de frein à pied (2', 2", 2‴) pour un dispositif de freinage à air comprimé d'un véhicule à moteur, avec une plaque de montage (4', 4") sur laquelle une pédale de frein (14) est montée en pivotement et au niveau de laquelle un logement (18', 18" ; 28) d'un bloc de commande électrique (16) et/ou d'un bloc de commande pneumatique (26) est fixé, dans laquelle un piston-poussoir (36) taré par ressort et qui se trouve en contact de réglage avec la pédale de frein (14) est guidé, en étant axialement mobile, dans un collier annulaire (50, 72) qui fait saillie en haut depuis la plaque de montage (4', 4"), **caractérisée en ce que** le logement (18', 18") du bloc de commande (16) agencé directement sous la plaque de montage (4', 4") présente une bride intermédiaire (48, 70) qui est vissée avec la pièce principale du logement (18', 18") et présente le collier annulaire (50, 72), et **en ce que** la bride intermédiaire (48, 70) est guidée en rotation coaxiale avec le collier annulaire (50, 72) autour d'un axe central (32) vertical dans un orifice de passage (40, 40') de la plaque de montage (4', 4'') et peut être reliée par liaison mécanique à la plaque de montage (4', 4") au moyen d'un assemblage par serrage (62, 76, 77) amovible.

2. Valve de frein à pied (2') selon la revendication 1, **caractérisée en ce que** l'assemblage par serrage (62) est formé par une rainure annulaire (52) externe dans le collier annulaire (50) de la bride intermédiaire (48) ainsi que par deux tôles de serrage (64, 64') agencées en diagonale face à face sur la plaque de montage (4') au niveau du collier annulaire (50) et qui viennent en prise dans la rainure annulaire (52), et **en ce que** les tôles de serrage (64, 64') sont vissées avec la plaque de montage (4'), sont respectivement coudées radialement à l'intérieur vers le haut en section transversale, et reposent à l'état monté avec une paroi frontale (66) interne en arc de cercle au niveau du fond de rainure (54) de la rainure annulaire (52) ainsi qu'avec leur bord intérieur (54) axialement externe en arc de cercle au niveau de la paroi latérale (56) supérieure de la rainure annulaire (52).

3. Valve de frein à pied (2') selon la revendication 2, **caractérisée en ce que** la paroi frontale (66) interne des tôles de serrage (64, 64') et le fond de rainure (54) de la rainure annulaire (52) du collier annulaire (50) sont respectivement conçus de façon lisse.

4. Valve de frein à pied (2') selon la revendication 2, **caractérisée en ce que** la paroi frontale (66) interne des tôles de serrage (64, 64') et le fond de rainure (54) de la rainure annulaire (52) du collier annulaire (50) sont respectivement conçus dentés du côté de la circonférence.

5. Valve de frein à pied (2') selon la revendication 4, **caractérisée en ce que** la paroi frontale (66) interne des tôles de serrage (64, 64') et le fond de rainure (54) de la rainure annulaire (52) du collier annulaire (50) sont respectivement dotés d'une cannelure du côté de la circonférence.

6. Valve de frein à pied (2") selon la revendication 1, **caractérisée en ce que** l'assemblage par serrage (76) est formé par un vissage par serrage (78), lequel comprend ce qui suit : un collier annulaire (42) sur le côté supérieur de la plaque de montage (4") avec une paroi intérieure (46) cylindrique et une bague de serrage (80) avec une paroi extérieure (82) et une paroi intérieure (84) conique qui se rétrécissent axialement vers le bas, et une paroi extérieure (74) conique au niveau du collier annulaire (72) de la bride intermédiaire (70) ainsi qu'un écrou de fixation (86) avec un taraudage (88), dans laquelle la bague de serrage (80) est agencée à l'état monté entre la paroi intérieure (46) du collier annulaire (42) de la plaque de montage (4") et la paroi extérieure (74) du collier annulaire (72) de la bride intermédiaire (70), et dans laquelle par vissage de l'écrou de fixation (86) avec le collier annulaire (42) de la plaque de montage (4") un serrage radial des deux colliers annulaires (42, 72) est provoqué au moyen de la bague de serrage (80).

7. Valve de frein à pied (2") selon la revendication 6, **caractérisée en ce que** la paroi intérieure (46) cylindrique du collier annulaire (42) de la plaque de montage (4"), la paroi intérieure (84) conique et la paroi extérieure (82) cylindrique de la bague de serrage (80) ainsi que la paroi extérieure (74) conique du collier annulaire (72) de la bride intermédiaire (70) sont respectivement conçues de façon lisse.

8. Valve de frein à pied (2") selon la revendication 6, **caractérisée en ce que** la paroi intérieure (46) cylindrique du collier annulaire (42) de la plaque de montage (4"), la paroi intérieure (84) conique et la paroi extérieure (82) cylindrique de la bague de serrage (80) ainsi que la paroi extérieure (74) conique du collier annulaire (72) de la bride intermédiaire (70) sont respectivement conçues dentées du côté de la circonférence.

9. Valve de frein à pied (2") selon la revendication 8, **caractérisée en ce que** la paroi intérieure (46) cylindrique du collier annulaire (42) de la plaque de montage (4"), la paroi intérieure (84) conique et la paroi extérieure (82) cylindrique de la bague de serrage (80) ainsi que la paroi extérieure (74) conique du collier annulaire (72) de la bride intermédiaire (70) sont respectivement dotées d'une cannelure du côté de la circonférence.

10. Valve de frein à pied (2‴) selon la revendication 1, **caractérisée en ce que** l'assemblage par serrage (77) est formé par un vissage par serrage (79) ; lequel comprend ce qui suit : un collier annulaire (42) sur le côté supérieur de la plaque de montage (4") avec un filetage extérieur (44) et avec une paroi intérieure (46) conique qui se rétrécit axialement vers le bas, une bague de serrage (81) avec une paroi extérieure (82) conique qui se rétrécit axialement vers le bas et une paroi intérieure (84) cylindrique, une paroi extérieure (74) cylindrique au niveau du collier annulaire (72) de la bride intermédiaire (70) et un écrou de fixation (86) avec un taraudage (88) ainsi qu'avec un filetage extérieur (90) au niveau du collier annulaire (72) de la bride intermédiaire (70) et un taraudage (92) au niveau de la paroi intérieure (84) de la bague de serrage (81), dans laquelle le taraudage (92) de la bague de serrage (81) à l'état monté est vissé avec le filetage extérieur (90) de la bride intermédiaire (70), et dans laquelle par le vissage de l'écrou de fixation (86) avec le collier annulaire (42) de la plaque de montage (4") un serrage radial des deux colliers annulaires (42, 72) est provoqué via la bague de serrage (80).

11. Valve de frein à pied (2‴) selon la revendication 10, **caractérisée en ce que** la paroi intérieure (46) du collier annulaire (42) au niveau de la plaque de montage (4") ainsi que la paroi extérieure (82) de la bague de serrage (81) sont respectivement conçues de façon lisse.

12. Valve de frein à pied (2‴) selon l'une des revendications 6 à 11, **caractérisée en ce que** la bague de serrage (80, 81) est conçue axialement fendue ou se compose de plusieurs segments annulaires.
